# EUROPEAN PATENT APPLICATION

(11) **EP 1 612 808 A1**
(43) Date of publication of application: **04.01.2006**
(21) Application number: 05009753.4
(22) Date of filing: 04.05.2005
(51) Int. Cl.: G21C 3/62

(54) **Nuclear fuel comprising an actinide nitride comprising isotopically enriched nitrogen**

(30) Priority: 29.06.2004 US 879416
(71) Applicant: Westinghouse Electric Company LLC, Pittsburgh, PA 15230-0355 (US)
(72) Inventor: Lahoda, Edward, J., Pittsburgh PA 15218-1352 (US); Brown, Jeffrey, A., Ellington Conneticut 06029 (US); Pati, Satya, R., Simsbury Conneticut 06070 (US); Hallstadius, Lars, G., 724,81 Vasteras (SE); Harris, Robert, P., Bloomfield Connecticut PA 06002 (US); Petrovic, Bojan, Monroeville Pennsylvania 15146 (US)
(74) Representative: Gallo, Wolfgang

(57) **Abstract**

The present invention provides a nuclear fuel comprising an actinide nitride such as uranium nitride, suitable for use in nuclear reactors, including those based substantially on thermal fission, such as light and heavy water or gas-cooled nuclear reactors. The fuel contains nitrogen which has been isotopically enriched to at least about 50% ¹⁵N, most preferably above 95%. The fuel can be in the form of particles, pellets, in annular form or other forms having high surface to volume ratios.

## Description

### FIELD OF THE INVENTION

The present invention relates to the field of nuclear fuels for nuclear power plants. Specifically, a fuel comprising an actinide nitride, suitable for use in light and heavy water or gas-cooled nuclear reactors, is provided. The fuel contains nitrogen which has been isotopically enriched to at least about 50% ¹⁵N.

### BACKGROUND INFORMATION

In a typical nuclear reactor, such as a pressurized water (PWR), heavy water or a boiling water reactor (BWR), the reactor core includes a large number of fuel assemblies, each of which is composed of a plurality of elongated fuel elements or rods. The fuel rods each contain fissile material such as uranium oxide (UO₂), usually in the form of a stack of nuclear fuel pellets, although annular or particle forms of fuel are also used. The fuel rods are grouped together in an array which is organized to provide a neutron flux in the core sufficient to support a high rate of nuclear fission and thus the release of a large amount of energy in the form of heat. A coolant, such as water or gas, is pumped through the core in order to extract some of the heat generated in the core for the production of useful work.

First generation nuclear reactors were reactors built to prove that nuclear energy could work in the lab as well as on the chalkboard. Second generation reactors, such as the PWR or BWR described above, took the technology one step further, demonstrating that the machines were economically feasible power plants. Most nuclear power plants in operation in the United States today are second generation plants. Emerging, third generation reactors are equipped with advanced features, such as safety systems incorporating passive energy dissipation or natural processes, simplifying their design and allowing them to cope with malfunctions without the need for complex auxiliary safety systems. While most second generation plants operate at very competitive power production cost rates, third generation plants have been designed that have increased capacity, a lower cost of generating electricity due to an increased output/investment ratio, and are cost-competitive to build.

Various methods are available to increase power production, some more desirable than others. Increasing the fuel utilization in a plant by shortening the fuel cycle is a widely recognized method, but shorter fuel cycles often result in higher production costs and more spent fuel waste discharge. Initiatives to decrease the rate of spent fuel production by increasing the discharge bumup is limited by fuel rod clad corrosion as well as by limits on fuel enrichment imposed by spent fuel pool considerations and fuel production plant limitations.

Another method to improve power production is the use of annular fuel. Annular fuel provides an increase in the surface area to volume ratio of over 50% as compared with solid-pellet fuel, and a corresponding increase in the volumetric heat flux or power density in the reactor. Unfortunately, this results in a shorter fuel cycle, due to the very high rate of usage and the fact that there is somewhat less uranium in the core than when solid pellets are used. Even with the use of longer fuel rods and reflectors to increase fuel efficiency, the fuel cycle falls short of the desired interval.

Fuel costs can be decreased by increasing the amount of uranium contained in each fuel rod. A sizeable increase in the uranium loading allows the number of assemblies loaded (and consequently the number discharged) to be decreased, thus decreasing the volume of discharged spent fuel. In addition, the higher loading results in lower ²³⁵U enrichment requirements, which results in better fuel utilization and lower fuel cycle costs. Decreasing the enrichment saves money because the cost of enriched fuel increases non-linearly with enrichment. That is, increasing the enrichment from 4% to 5% increases the cost for the uranium by more than 25%. Finally, a substantial increase in the uranium loading in each fuel rod facilitates the implementation of longer fuel cycles (improving capacity) or an increase in the power level of existing plants, thereby providing new electricity at minimal expense.

For new plants as well as those currently operating, it is desirable to increase the utilization of nuclear fuel and decrease the volume of spent fuel produced by these plants.

### SUMMARY OF THE INVENTION

The present invention meets the above objectives by providing a cost-effective nuclear fuel for use in nuclear reactors, including light and heavy water or gas-cooled nuclear reactors. The fuel comprises an actinide nitride in which the nitrogen has been isotopically enriched to at least about 50% ¹⁵N. The use of an actinide nitride having enriched nitrogen provides a significant increase in fuel economy, as compared with UO₂ or UZrN fuels. A preferred actinide nitride is U¹⁵N.

It is an object of the present invention, therefore, to provide an economical fuel for use in nuclear reactors, including light and heavy water or gas-cooled nuclear reactors.

It is an additional object of the present invention to provide an actinide nitride fuel having enriched nitrogen-15, for use in light and heavy water or gas-cooled nuclear reactors.

It is a further object of the present invention to provide an economical fuel for use in light and heavy water or gas-cooled nuclear reactors, the fuel having the added benefit of reducing the volume of spent fuel discharged from the reactor.

These and other objects will become more readily apparent from the following detailed description and appended claims.

### DETAILED DESCRIPTION OF PREFERRED EMBODIMENTS

Accordingly, the present invention provides a nuclear fuel for use in a nuclear reactor comprising an actinide nitride, the actinide nitride comprising nitrogen enriched to at least about 50% ¹⁵N. Preferably, the actinide nitride comprises nitrogen enriched to at least about 90% ¹⁵N. Most preferably, the actinide nitride comprises nitrogen enriched to at least about 95% ¹⁵N. Suitable actinides include uranium, plutonium, and other elements in the actinide series. A preferred actinide is uranium. The following disclosure refers specifically to uranium nitride but is also descriptive of actinide nitrides suitable for use in the present invention.

The stoichiometric ratio of uranium to nitrogen is preferably 1:1, but can range from between about 1:1 to about 1:2. Stoichiometric UN is preferred because it provides better corrosion resistance and minimal fission gas release.

As mentioned above, the use of U¹⁵N fuel provides significant fuel economy as compared to the use of natural N. As can be seen in Table 1, rods containing U¹⁵N fuel contain significantly more uranium per rod, up to 40% more as compared to UO₂ and UZr_{20%}N.

**Table 1**

| Pellet | Theoretical Pellet Stack Uranium Density (gu/cc) | Kg U/rod |
|---|---|---|
| UO₂ | 9.7 | 1.86 |
| UZr_{20%}N | 11.8 | 2.06 |
| UN | 13.4 | 2.58 |

Additionally, U¹⁵N fuel has a lower parasitic cross-section, due to an order of magnitude lower neutron cross-section of ¹⁵N, as compared with oxygen. See, e.g., A.K. Petrov et al., *J. Russ. Chem. Bull.,* 47:714 (1998); N.V. Chekalin et al., *Phys. Lett.,* 59A:243 (1976); and N.V. Chekalia et al., *Appl. Phys.,* 13:311 (1977). This results in the loss of fewer neutrons to parasitic reactions that do not result in fission. Below about 50% ¹⁵N enrichment, use of U¹⁵N fuel provides no benefit as compared with UO₂, due to the loss of neutrons to parasitic reactions with ¹⁴N. Thus, the optimum level of ¹⁵N is a trade-off between the cost of enrichment and the neutron penalty in the reactor. The increase in uranium density, in combination with longer fuel rods, can increase the uranium content of the core to an amount sufficient to reduce the feed and discharge batch size while preserving the desired fuel cycle, even for high power cores. In addition, the higher density can be used to increase fuel utilization and reduce fuel cost by reducing ²³⁵U enrichment requirements, increase the discharge batch burnup, and/or reduce the number of new assemblies in each fuel reload, or a combination of all three.

The use of UN with enriched ¹⁵N has additional advantages. Radioactive carbon-14 is produced due to (n, p) reactions on nitrogen-14, the most common isotope of nitrogen, and is thus an undesirable by-product from use of UN fuels. The use of ¹⁵N reduces or potentially eliminates this problem.

Uranium nitride fuel with natural nitrogen is used in fast breeder reactors. However, loss of neutrons due to reactions on nitrogen-14 makes the use of unenriched UN uneconomical in reactors based on thermal fission. Light and heavy water reactors run under less stringent conditions than fast breeder reactors (heat rates, neutron fluxes and temperatures), and the economy of neutrons is the foremost consideration. Table 2 provides a comparison of the economic benefits of U¹⁵N fuel having nitrogen enriched to 100% ¹⁵N, as compared with other fuel types.

**Table 2**

| Pellet Composition | Feed Batch Size (Assm) | Equivalent UO2 Rod Burnup Limit (GWD/MTU) | Batch Discharge Burnup (GWD/MTU) | Relative Feed Cost | | | % Change in Total Fuel Cycle Cost |
|---|---|---|---|---|---|---|---|
| | | | | U Only | Total¹ | Total² | |
| UO₂ | 96 | 60 | 48.6 | $43.5M | $57.6M | $56.7M | 5.71m/kwhe |
| UZrN14 | 100 | 60 | 40.9 | +31.5% | +29.7% | +27.9% | ³ +21.9% |
| UZrN15 | 96 | 60 | 42.6 | +0.7% | +2.6% | +0.5% | -0% |
| UZrN15 | 80 | 75 | 51.1 | -3.4% | -3.6% | -5.3% | -5.6% |
| UN15 | 96 | 60 | 34.1 | +0.2% | +6.6% | +0.4% | -0.2% |
| UN15 | 72 | 70 | 45.4 | -3.7% | -2.1% | -6.7% | -5.4% |
| UN15 | 68 | 75 | 48.1 | -3.7% | -3.0% | -7.1% | -7.2% |

| | | | | | | | |
|---|---|---|---|---|---|---|---|
| Table 2 Notes: | | | | | | | |
| 1. When fabrication cost is $210/KgU | | | | | | | |
| 2. When fabrication cost is $80K/assembly. | | | | | | | |
| 3. Assuming 0.3 wt% tails, $12/lbU3O8 ore, $5.1/lbU conversion, $105/KgSWU enriching, $200K/assembly disposal | | | | | | | |

When referring to any numerical range of values herein, such ranges are understood to include each and every number and/or fraction between the stated range minimum and maximum. A range of at least about 50% ¹⁵N, for example, would expressly include all intermediate values of about 51 %, 52%, 53%, 54% 55%, all the way up to and including 99%, 99.1%, 99.2%, up to and including 100% ¹⁵N.

Methods of isotopically enriching nitrogen are known in the art. For example, enriched nitrogen is a by-product of the manufacture of heavy water, in the form of NH₃. The level of ¹⁵N enrichment from this process can be on the order of several percent, and this can be further upgraded to produce the desired level of enrichment. Another method is laser isotope enrichment in infrared, using CH₃NO₂ and/or CH₃NH₂ as working molecules. Another possibility is the use of NH₃ as the working molecule in two-color laser isotope enrichment. Any of the above may be used alone or in combination, or in combination with other enrichment methods. Preferred is the use of the heavy water separation process to obtain the initial enriched ¹⁵NH₃, and then use of this as the working molecule for further enrichment with the laser isotope separation method. This method is the most cost effective, and has recently become feasible due to the development of improved laser isotope separation methods.

Methods of producing uranium nitride, using unenriched nitrogen, for use as a nuclear fuel are also known. See, e.g., US Patent Nos. 3953355; 3953556; 4029740; 4231976; 4338125; and 4624828, for various methods of producing UN. Any of these methods, or other methods known in the art, can also be used to make UN fuel using enriched nitrogen-15.

The U¹⁵N fuel of the present invention can be in various forms, including, but not limited to, pellet, annular, particle, or other shapes having improved surface to volume ratios as compared with pellets, such as four-leaf clovers. Pelleting methods known in the art can be used, and about 95% theoretical density can be achieved with U¹⁵N fuel.

The above described U¹⁵N fuel is suitable and economical for use in fast breeder reactors, as well as reactors that are substantially based on thermal fission such as light or heavy water nuclear reactors, including pressurized water reactors (PWR), boiling water reactors (BWR) and pressurized heavy water reactors (PHWR or CANDU), as well as gas-cooled reactors such as pebble bed reactors (PBMR) or prismatic reactors.

If desired, the U¹⁵N can be used in combination with a burnable absorber such as boron, cadmium, gadolinium, europium, and erbium or the like, as described in US Patent No. 5,147,598, to control initial excess reactivity in the core.

Whereas particular embodiments of this invention have been described above for purposes of illustration, it will be evident to those skilled in the art that numerous variations of the details of the present invention may be made without departing from the invention as defined in the appended claims.

## Claims

1. A nuclear fuel for use in a nuclear reactor comprising an actinide nitride, said actinide nitride comprising nitrogen enriched to at least about 50% ¹⁵N, and having an atomic ratio of actinide: nitride of between about 1:1 to 1:2.

2. The nuclear fuel of claim 1, wherein said reactor is a reactor based substantially on thermal fission.

3. The nuclear fuel of claim 2, wherein said nuclear reactor is a pressurized water or heavy water reactor or a boiling water reactor.

4. The nuclear fuel of claim 2, wherein said nuclear reactor is a pebble bed or prismatic gas-cooled reactor.

5. The nuclear fuel of any of claims 1 to 4, further comprising a burnable absorber.

6. The nuclear fuel of any of claims 1 to 5, wherein said actinide nitride is U¹⁵N.

7. The nuclear fuel of claim 5, wherein said U¹⁵N fuel is in pellet form or in annular form or in particle form.

8. The nuclear fuel of claim 6 or claim 7, wherein said uranium nitride comprises nitrogen enriched to at least about 50% ¹⁵N.

9. The nuclear fuel of claim 8, wherein said uranium nitride comprises nitrogen enriched to at least about 95% ¹⁵N.

10. The nuclear fuel of any of claims 6 to 9, wherein said atomic ratio of uranium:nitride is 1:1.
